# EUROPEAN PATENT APPLICATION

(11) **EP 4 831 787 A1**
(43) Date of publication of application: **28.10.2026**
(21) Application number: 25206779.8
(22) Date of filing: 06.10.2025
(51) Int. Cl.: G06F 3/12

(54) **INFORMATION PROCESSING SYSTEM, INFORMATION PROCESSING PROGRAM, AND INFORMATION PROCESSING METHOD**

(30) Priority: 22.04.2025 JP 2025070779
(71) Applicant: FUJIFILM Business Innovation Corp., Minato-ku Tokyo (JP)
(72) Inventor: SUGAWARA, Masafumi, Yokohama-shi, Kanagawa (JP); TONOUCHI, Masaharu, Yokohama-shi, Kanagawa (JP); OTAKI, Masanobu, Yokohama-shi, Kanagawa (JP)
(74) Representative: Becker Kurig & Partner Patentanwälte mbB

(57) **Abstract**

An information processing system includes a processor configured to: input, to a trained model that has been trained in advance to output information related to a printer resource used for printing a manuscript by a print job for printing the manuscript in a case of receiving input information including information related to the print job, new input information including information related to a new print job for printing a manuscript, and output information related to a printer resource which is used in a printing apparatus that prints the manuscript and which corresponds to the new input information.

## Description

### BACKGROUND OF THE INVENTION

### (i) Field of the Invention

The technology of the present disclosure relates to an information processing system, an information processing program, and an information processing method.

### (ii) Description of Related Art

JP2012-95162A discloses an image forming apparatus including a job input unit for inputting a print job, a storage unit that stores a plurality of print jobs, an input unit that receives a setting of two-sided printing with connection in which the plurality of print jobs are connected to each other to perform two-sided printing, a layout processing unit that arranges pages in the two-sided printing with connection such that pages of at least one of the connected print jobs are printed to be aligned on one surface of paper in a case where the two-sided printing with connection is set, an image forming unit that performs printing based on the arrangement of the pages made by the arrangement processing unit, and a two-sided printing mechanism that feeds single-side-printed paper again to the image forming unit.

### SUMMARY OF THE INVENTION

In a case of printing a generated manuscript with a printer, in order to achieve automation or improve productivity, printing operations are often standardized according to the content of printing work undertaken. In workflow software or in a printer that sets printer processing, printing automation and operational efficiency are achieved by using job settings (printer resources) of a workflow or a template depending on the work content.

However, there are many settings for the printer, and, in a case where the number of workflows or templates is increased due to a difference in detailed settings, management of the workflows or templates becomes complicated, and similar workflows or templates are created by different operators. Therefore, it is not possible to select an appropriate workflow or template job setting, and the workflow or template that has been created with great effort cannot be used efficiently.

In particular, business-use printers are provided with a variety of specialized functions, but it is difficult even for an operator who is accustomed to the operation to understand what functions are available, what results are obtained in a case where the functions are set, and where the functions can be set. For example, it is beneficial to automate the setting according to the content of the printing work. In addition, in a case of performing the printing work, there are a variety of printers of various manufacturers and workflow software, making it difficult to understand which workflow should be used for job setting of the printer template.

An object of the present disclosure is to provide an information processing system, an information processing program, and an information processing method that can output an appropriate printer resource by using a trained model that has been trained in advance, compared to a case where the trained model is not used.

According to a first aspect of the present disclosure, there is provided an information processing system including a processor configured to input, to a trained model that has been trained in advance to output information related to a printer resource used for printing a manuscript by a print job for printing the manuscript in a case of receiving input information including information related to the print job, new input information including information related to a new print job for printing a manuscript, and output information related to a printer resource which is used in a printing apparatus that prints the manuscript and which corresponds to the new input information.

According to a second aspect of the present disclosure, in the information processing system according to the first aspect, the information related to the printer resource may include a workflow that is a flow of a printing process in the printing apparatus or a template that is a setting for printing a printed matter in the printing apparatus.

According to a third aspect of the present disclosure, in the information processing system according to the first or second aspect, the processor may be configured to train the trained model using, as learning data, information related to the manuscript as the information related to the print job and the information related to the printer resource.

According to a fourth aspect of the present disclosure, in the information processing system according to the third aspect, the processor may be configured to train the trained model using, as learning data, a name of the print job and a name of an application in which the manuscript is generated as the information related to the print job.

According to a fifth aspect of the present disclosure, in the information processing system according to the third or fourth aspect, the processor may be configured to train the trained model using, as learning data, content of printing work of the manuscript as the information related to the print job.

According to a sixth aspect of the present disclosure, in the information processing system according to any one of the first to fifth aspects, the processor may be configured to automatically apply, to the printing apparatus, the output information related to the printer resource corresponding to the new input information.

According to a seventh aspect of the present disclosure, in the information processing system according to any one of the first to sixth aspects, the processor may be configured to, in a case where the output information related to the printer resource corresponding to the new input information is not present in the printing apparatus but is present in another printing apparatus, apply, to the printing apparatus, the information related to the printer resource corresponding to the new input information present in the other printing apparatus.

According to an eighth aspect of the present disclosure, there is provided an information processing program causing a computer to execute inputting, to a trained model that has been trained in advance to output information related to a printer resource used for printing a manuscript by a print job for printing the manuscript in a case of receiving input information including information related to the print job, new input information including information related to a new print job for printing a manuscript, and outputting information related to a printer resource which is used in a printing apparatus that prints the manuscript and which corresponds to the new input information.

According to a ninth aspect of the present disclosure, there is provided an information processing method including inputting, to a trained model that has been trained in advance to output information related to a printer resource used for printing a manuscript by a print job for printing the manuscript in a case of receiving input information including information related to the print job, new input information including information related to a new print job for printing a manuscript, and outputting information related to a printer resource which is used in a printing apparatus that prints the manuscript and which corresponds to the new input information.

According to the first, eighth, and ninth aspects of the present disclosure, it is possible to output information related to an appropriate printer resource.

According to the second aspect of the present disclosure, it is possible to output an appropriate workflow or template.

According to the third aspect of the present disclosure, it is possible to output information related to an appropriate printer resource by using the trained model trained using the information related to the manuscript and the information related to the printer resource.

According to the fourth aspect of the present disclosure, it is possible to output information related to an appropriate printer resource by using the trained model trained using the name of the print job and the name of the application in which the document is generated.

According to the fifth aspect of the present disclosure, it is possible to output information related to an appropriate printer resource by using the trained model trained using the content of the printing work of the manuscript.

According to the sixth aspect of the present disclosure, it is possible to automatically apply the output printer resource to the printing apparatus.

According to the seventh aspect of the present disclosure, it is possible to automatically apply the information related to the printer resource present in the other printing apparatus to the printing apparatus.

### BRIEF DESCRIPTION OF THE DRAWINGS

Exemplary embodiment(s) of the present invention will be described in detail based on the following figures, wherein:
FIG. 1 is a diagram showing a schematic configuration of an information processing system according to an exemplary embodiment of the technology of the present disclosure;
FIG. 2 is a block diagram showing a major configuration of an electrical system of a printing apparatus in the information processing system according to the present exemplary embodiment;
FIG. 3 is a block diagram showing a major configuration of an electrical system of a management apparatus and a client computer in the information processing system according to the present exemplary embodiment;
FIG. 4 is a block diagram showing an example of a functional configuration of the client computer;
FIG. 5 is a diagram showing estimation of information related to a printer resource corresponding to input information using a neural network;
FIG. 6 is a flowchart showing a learning process using the client computer;
FIG. 7 is a flowchart showing an estimation process using the client computer;
FIG. 8 is a diagram showing an example of a screen displayed by the client computer;
FIG. 9 is a diagram showing an example of a screen displayed by the client computer;
FIG. 10 is a diagram showing an example of a screen displayed by the client computer;
FIG. 11 is a diagram showing an example of a screen displayed by the client computer;
FIG. 12 is a diagram showing an example of a screen displayed by the client computer;
FIG. 13 is a flowchart showing an estimation process using the client computer;
FIG. 14 is a diagram showing an example of a screen displayed by the client computer; and
FIG. 15 is a diagram showing an example of a screen displayed by the client computer.

### DETAILED DESCRIPTION OF THE INVENTION

Hereinafter, an example of an exemplary embodiment of the technology of the present disclosure will be described with reference to the drawings. The identical reference numerals are given to the identical or equivalent components and parts in each drawing. Dimensional ratios in the drawings are exaggerated for convenience of description and may be different from actual ratios.

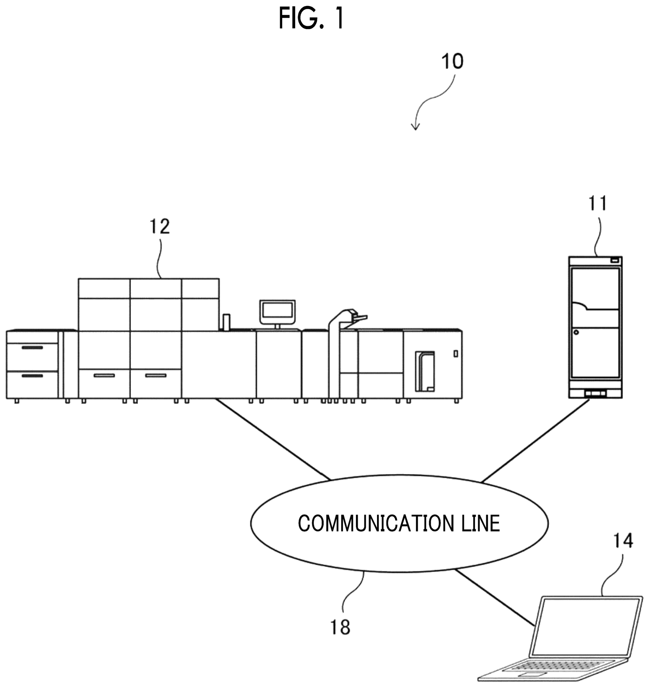

In the present exemplary embodiment, an information processing system in which a printing apparatus, a client computer, and the like are connected to each other via communication lines such as various networks is described as an example. FIG. 1 is a diagram showing a schematic configuration of an information processing system 10 according to the present exemplary embodiment.

As shown in FIG. 1, the information processing system 10 according to the present exemplary embodiment includes a management apparatus 11, a printing apparatus 12, a client computer 14, and the like. The management apparatus 11, the printing apparatus 12, and the client computer 14 are connected to each other via a communication line 18 such as a local area network (LAN), a wide area network (WAN), the Internet, and an intranet. Then, each of the management apparatus 11, the printing apparatus 12, and the client computer 14 can transmit and receive various data to and from each other via the communication line 18. In the present exemplary embodiment, a print instruction is sent from the client computer 14 to the printing apparatus 12 via the management apparatus 11, an image corresponding to the print instruction is formed in the printing apparatus 12.

In FIG. 1, one management apparatus 11, one printing apparatus 12, and one client computer 14 are shown, but each of the apparatuses may be plural or any of the apparatuses may be plural.

The printing apparatus 12 according to the present exemplary embodiment has a plurality of functions such as a printing function of performing a printing process and a post-processing function of performing post-processing on paper on which an image is formed. The plurality of functions may include a scanning function of scanning a manuscript to obtain image information representing the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a fax, the scanning function may be referred to as a scan, the printing function may be referred to as a print, and the duplicating function may be referred to as a copy.

The settings for the printing processing using the printing apparatus 12 in the information processing system 10 may differ depending on a printing target or a client who has undertaken the work. For example, in a case of imposition, the settings are not uniquely determined, and imposition settings are specialized and involve various considerations. Specifically, there are various imposition settings, such as binding method, paper size and orientation, finished size and orientation, binding direction and layout, print marks such as register marks, color patches, barcodes, cut marks, and job information, margins during printing, and page layout. As described above, there are many settings in the printing apparatus 12, and, in a case where the number of workflows or templates increases due to a detailed difference in settings, management of the workflows or templates becomes complicated. Therefore, the similar workflows or templates are created by different operators, making it impossible to select an appropriate workflow or template job setting, and the workflow or template that has been created with great effort cannot be used efficiently.

For example, there are various manuscript sizes, and, in PDF, in addition to the paper size, size information of each of a crop size, a bleed size, and a finished size is defined and can be used. In addition to considering whether there is a designation in the manuscript, it is necessary to consider which size is used as the manuscript size, whether that size matches the finished size, to what extent a difference exists in a case where the sizes do not match, whether the size is portrait or landscape, and how to set the finished orientation.

In addition, it is necessary to consider the layout settings of each page, such as reversing the back side, in order to ensure a needed state of the final finished product. As post-processing, in a case where trimming is involved, the content of the manuscript is taken into account so that the printed result is uniform, and, in some cases, top-bottom alignment or top-bottom inversion is performed, or only one of the imposed plates is rotated by 180 degrees and arranged. In offset printing, techniques, such as half-sheet work/work and tumble and staggered layout, are known, which reduce the number of printing plates and facilitate color adjustment.

There are also various types of register marks, such as crop marks, imposition marks, folding marks, and alignment marks, depending on the purpose. It is necessary to consider whether folding or trimming is required as post-processing and which type (Japanese style or Western style, size, shape) of register marks should be used. In setting crop marks, it is necessary to consider whether trimming is required and which type to use, and further to consider that the crop marks have to be set according to the overall layout and margin amount based on the display size. In addition, the settings of the job information, the color patch, the barcode, and the cut mark require adjustment of position and size according to the need in post-processing or the printing process, the relationship with other displays such as register marks, and the margin amount. In addition, it is necessary to consider that the displayable range varies depending on the printable area of the printing apparatus and the sheet size and what information needs to be appended for management of the printing process.

In addition, in a case of setting the bleed width, it is necessary to determine the necessity of setting the bleed width, and the setting is made depending on whether there is a white margin at the four corners of the manuscript or whether the color is applied to the four corners of the manuscript. It is also necessary to consider, in a case where the finished size is the same as the size to be used, whether the manuscript provides a sufficient bleed area and whether any deviation caused by trimming is acceptable. In setting the gap width, it is necessary to consider not only the presence or absence of the margin or the bleed area of the manuscript but also how much width is required in the vertical and horizontal directions in the post-processing.

The information processing system 10 according to the present exemplary embodiment is characterized by achieving the efficiency of the printing work by constructing a neural network model through machine learning and outputting information related to a printer resource corresponding to a print job from the neural network model.

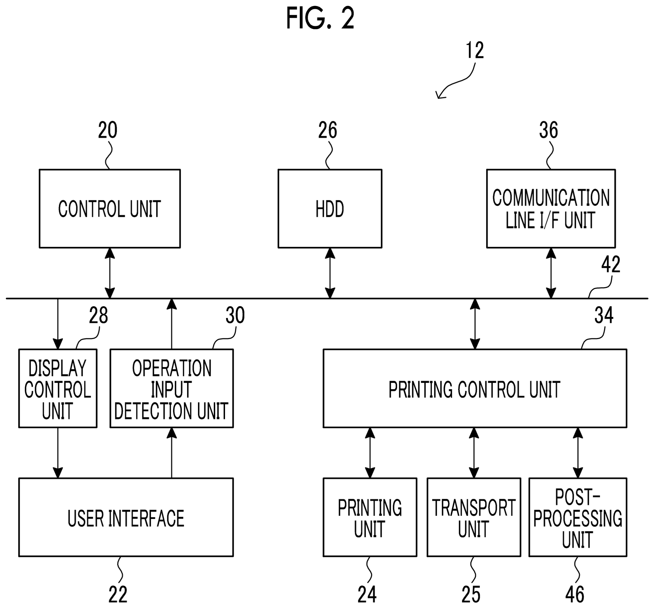

FIG. 2 is a block diagram showing a major configuration of an electrical system of the printing apparatus 12 in the information processing system 10 according to the present exemplary embodiment.

As shown in FIG. 2, the printing apparatus 12 according to the present exemplary embodiment includes a control unit 20. The control unit 20 may include a central processing unit (CPU), a read only memory (ROM), and a random access memory (RAM).

Meanwhile, the printing apparatus 12 according to the present exemplary embodiment includes a hard disk drive (HDD) 26 that stores various data, application programs, and the like. In addition, the printing apparatus 12 includes a display control unit 28 that is connected to a user interface 22 and that controls display of various operation screens and the like on a display of the user interface 22. In addition, the printing apparatus 12 includes an operation input detection unit 30 that is connected to the user interface 22 and that detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited to this, and a non-volatile storage unit such as a flash memory may be applied. In addition, in the present exemplary embodiment, a touch panel that can perform display and operation input is applied to the user interface 22, but the present disclosure is not limited to this, and a user interface in which a display and an operation unit are separate may be applied.

In addition, the printing apparatus 12 according to the present exemplary embodiment includes a printing control unit 34 that controls a printing process by a printing unit 24, the transport of the paper to the printing unit 24 by a transport unit 25, the post-processing by a post-processing unit 46, a scanning process of the printed matter by an inspection unit 47, and a printing control unit 34 that controls maintenance by a maintenance unit 48. The printing unit 24 performs printing using a liquid droplet jetting head. The maintenance unit 48 performs maintenance on the liquid droplet jetting head. The printing apparatus 12 may include a scanning control unit that controls an optical image scanning operation by a manuscript scanning unit and a manuscript feeding operation by a manuscript transport unit. In addition, the printing apparatus 12 includes a communication line interface (I/F) unit 36 that is connected to the communication line 18 and that transmits and receives communication data to and from other external apparatuses such as the client computer 14 connected to the communication line 18. In addition, the printing apparatus 12 may include a facsimile interface (I/F) unit that is connected to a telephone line (not shown) and that transmits and receives facsimile data to and from a facsimile apparatus connected to the telephone line. In addition, the printing apparatus 12 may include a transmission and reception control unit that controls transmission and reception of the facsimile data via a facsimile I/F unit 38. In the printing apparatus 12, the printing control unit 34 and the communication line I/F unit 36 are electrically connected to the system bus 42.

With the above configuration, the printing apparatus 12 according to the present exemplary embodiment uses the control unit 20 to execute control of display of an operation screen and information, such as various messages, on the display of the user interface 22 via the display control unit 28. In addition, the printing apparatus 12 uses the control unit 20 to execute each of the control of the operation of the printing unit 24, the transport unit 25, the post-processing unit 46, the inspection unit 47, and the maintenance unit 48 via the printing control unit 34, and the control of the transmission and reception of the communication data via the communication line I/F unit 36. Further, the printing apparatus 12 uses the control unit 20 to ascertain operation content in the user interface 22 based on operation information, which is detected by the operation input detection unit 30, and to execute various kinds of control based on the operation content.

As an example of the applications stored in the HDD 26, in the present exemplary embodiment, an application that executes a function such as printing is included.

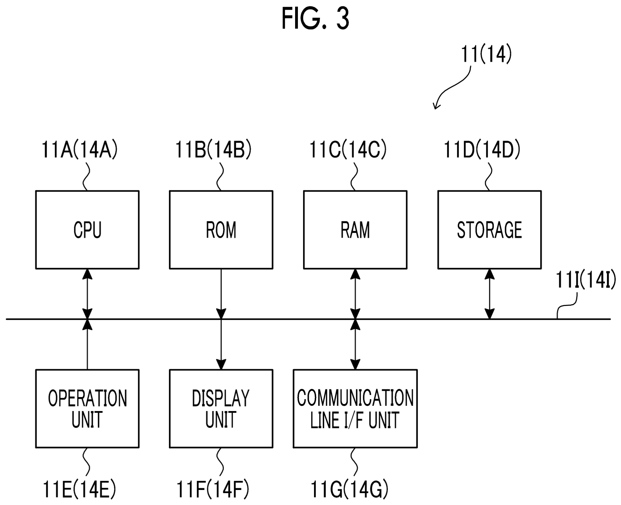

Subsequently, a major configuration of an electrical system of the management apparatus 11 and the client computer 14 according to the present exemplary embodiment will be described. FIG. 3 is a block diagram showing the major configuration of the electrical system of the management apparatus 11 and the client computer 14 in the information processing system 10 according to the present exemplary embodiment. Since the management apparatus 11 and the client computer 14 have a general computer configuration, the management apparatus 11 will be described below as a representative example.

As shown in FIG. 3, the management apparatus 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A controls the overall operation of the management apparatus 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used to display the various types of information. The communication line I/F unit 11G is connected to the communication line 18 and transmits and receives various data to and from other apparatuses connected to the communication line 18. In addition, the communication line I/F unit 11G may be configured to be capable of directly communicating with each device by using various well-known wireless communications. Each unit of the management apparatus 11 described above is electrically connected to each other by a system bus 11I. In the management apparatus 11 according to the present exemplary embodiment, the storage 11D is applied as a storage unit, but, as an example of the storage, a non-volatile storage unit, such as a hard disk drive (HDD) or a flash memory, is applied.

With such a configuration, in the management apparatus 11 according to the present exemplary embodiment, the CPU 11A executes accesses to the ROM 11B, the RAM 11C, and the storage 11D, acquisition of various data via the operation unit 11E, and display of various types of information on the display unit 11F. In addition, the management apparatus 11 executes control of transmission and reception of the communication data via the communication line I/F unit 11G using the CPU 11A.

In the information processing system 10 having the above-described configuration, the management apparatus 11 manages a series of manufacturing processes. The series of manufacturing processes includes, for example, production process, a prepress process, a plate-making process, a printing process, a finishing process, and a distribution process.

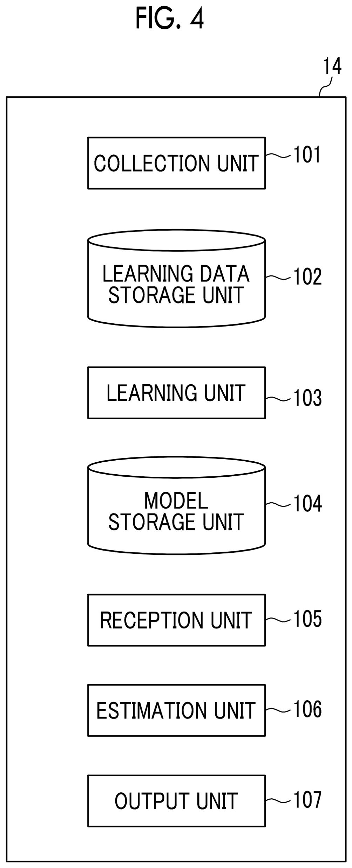

Next, a functional configuration of the client computer 14 will be described. FIG. 4 is a block diagram showing an example of the functional configuration of the client computer 14.

Functionally, as shown in FIG. 4, the client computer 14 includes a collection unit 101, a learning data storage unit 102, a learning unit 103, a model storage unit 104, a reception unit 105, an estimation unit 106, and an output unit 107.

The collection unit 101 collects learning data including a pair of input information including information related to a print job for printing a manuscript on the printing apparatus 12 and information related to a printer resource used in the printing apparatus 12 to print the manuscript according to the print job. The information related to the printer resource includes a workflow that is a flow of a printing process in the printing apparatus 12 or a template that is a setting for printing a printed matter in the printing apparatus 12.

Here, a correlation between various types of information included in the input information and information related to the printer resource will be described.

The input information includes information related to manuscript information and information related to the printer resource. The manuscript information includes a data format of the manuscript, a manuscript size, a drawing direction, in-manuscript object information, the presence or absence of a margin, the presence or absence of imposition, and BOX information (size information such as a crop size, a bleed size, and a finished size in addition to a manuscript (paper) size). The information related to the printer resource includes workflow information and template information. The workflow information includes a workflow name, an input method, and a format, and the template information includes a template name and a job setting in the template.

Since the required processing differs depending on the data format and the templates are also distinguished, there is a case where the printing apparatus 12 is operated by being logically divided. Accordingly, the data format of the manuscript is correlated with the information related to the printer resource. The necessary settings for the printing apparatus 12 vary depending on the size of the manuscript and the in-manuscript object information. In a case where the manuscript size is used as the finished size, each type of the BOX information described in PostScript or PDF document may be used as the finished size. In addition, whether or not the finished size or the bleed size is designated in the manuscript varies depending on the manuscript, and has a strong correlation with the imposition layout and the printing option settings of the printing apparatus 12. In a case where an object in the manuscript is placed up to the page edge, printing on paper of the same size may cause parts of an image to be cut off by the unprintable area of the printing apparatus 12. Therefore, the in-manuscript object information, the presence or absence of the margin, and the presence or absence of imposition are correlated with the imposition layout and the printing option settings of the printing apparatus 12.

In the information processing system 10, a fixed workflow is registered and used according to the work content. The individual job setting is made taking into consideration of the manuscript information, the information on the printing apparatus 12, and the cooperation with the post-processing, and the template is saved and is used in the operation. Accordingly, since the information related to the printer resource is set for each printing work according to the manuscript, there is a correlation with the manuscript information.

The manuscript information may include a print job name, a manuscript name, and a generation application name in the manuscript. In printing work, management may be performed by an upper-level application such as workflow software using a unique job name or manuscript name. Specifically, the work and the print job are identified using keywords such as catalog, booklet, and business card. In addition, in a process of repeating data proofreading several times, a trial print and a main print as a final output may be performed. From the manuscript name, it can be understood whether the manuscript is in a proofreading stage or in a main printing stage, and in some cases, distinction can be made by partial matching of the manuscript name. In modifying data in a (pre-printing) pre-press process, information such as a name of the application that generated the manuscript may be recorded as manuscript-internal information. A manuscript output by a certain application is color-managed and therefore does not require a color adjustment step, while a manuscript output by another application may or may not have imposition settings in a pre-press process, enabling such distinctions. Therefore, the print job name, the manuscript name, and the application name in the manuscript have a correlation with the information related to the printer resource.

The input information may include information related to the content of the printing work. The information related to the content of the printing work is, for example, information on a category of the work content, such as a business card, a catalog, a POP display, a label, a poster, a magazine, a photo book, or a booklet. Since different workflows or templates are used depending on the content of the printing work, in a case where information related to the content of the printing work is known, the workflow or the template to be selected can be determined. Accordingly, the information related to the content of the printing work has a correlation with the information related to the printer resource. In a case where the printing process is managed in cooperation with an order management system for the printing work, such as a management information system (MIS) or Web Print, it is possible to acquire information related to the content of the printing work from these systems.

The information related to the printer resource may include workflow information and template information. The workflow information and the template information may include creator information, a usage time of the printing apparatus 12 using the workflow or the template, and the number of times printing has been performed from the printing apparatus 12 using the workflow or the template. The creator information may be a name or an identification ID. It is considered that a workflow or a template that is frequently used has reliability, and a workflow or a template created by a skilled operator has a high accuracy and is less prone to errors. Accordingly, the workflow information and the template information have a correlation with the information related to the printer resource.

The input information may include information on an application used for creating a manuscript, information on the connected printing apparatus 12, information on post-processing after printing, and the like. The information on the application may include information on an application name, an application type, and a version. The information on the connected printing apparatus 12 may include a model, supported paper type and size, history, paper running record (including information on basis weight, thickness, glossiness, manufacturer, and the like), information on an installation location (including information on an address, a floor, and a room), controller and print (RIP) server versions, and information on an installed setting function. The information on the post-processing after printing may include a model of an apparatus that performs the post-processing, setting information (trimming, folding, creasing, foiling, and the like) of the post-processing, and information on an installation location (address, floor, and room). In a case where these pieces of information are known, the workflow or the template to be selected can be determined. Accordingly, the information on the application used for creating the manuscript, the information on the connected printing apparatus 12, the information on the post-processing after printing, and the like have a correlation with the information related to the printer resource.

The input information may include information related to a print job. The information related to the print job may include information related to a type of paper, a type of printed matter, a printing speed, or an image to be printed.

Specifically, the type of paper includes, for example, coated paper, matte paper, fine paper of 90 kg, fine paper of 110 kg, long No. 3 envelope (long size No. 3), long No. 4 envelope (long size No. 4), western-style long No. 3 envelope (western-style long size No. 3), square No. 3 envelope (square size No. 3), square No. 4 envelope (square No. 4), transfer forms, business forms, ordinary postcards, return postcards, and New Year's postcards. The type of printed matter includes, for example, a photo book, a poster, a magazine, a flyer, an envelope, a business card, a catalog, and a newspaper. The information related to the image to be printed includes, for example, a ratio of an area to be printed on a paper surface and a type of an object to be printed.

The input information is not limited to the above. It goes without saying that any information can be used as the input information as long as the information is correlated with the information related to the printer resource.

The learning data storage unit 102 stores a plurality of learning data collected by the collection unit 101.

The learning unit 103 constructs a neural network model that receives an input of input information and outputs information related to a printer resource that corresponds to the input information and that is used for printing a manuscript by a print job, based on the plurality of learning data.

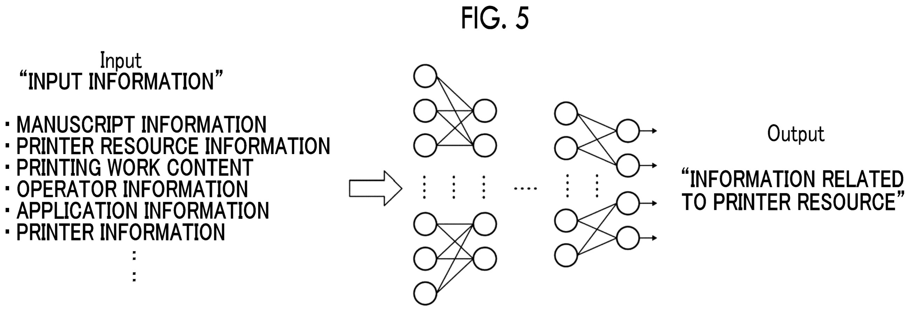

Specifically, the trained neural network model receives an input of input information including information related to the print job for printing the manuscript, and estimates information related to the printer resource corresponding to the input information (see FIG. 5). Deep learning can be used as an example of a learning algorithm, and a neural network model may be constructed such that, in a case where input information of learning data is input, information related to the printer resource in the learning data is output.

More specifically, the input information of the learning data may be used as an input, and the information related to the printer resource may be estimated as an output of the model, and the estimated information of the printer resource may be compared with information related to the printer resource in the learning data to calculate an error in the information related to the printer resource, and parameters of the model may be updated so as to minimize an error value.

The model storage unit 104 stores a trained neural network model.

The reception unit 105 receives input information related to a new print job to be estimated. The input information may include information related to a print job. For example, the information acquired from the management apparatus 11, such as the type of paper "fine paper of 90 kg", the type of printed matter "photo book", the printing speed "10 ppm", the ratio of the area to be printed on the paper surface "30%", and the type of object to be printed "image" is received.

The estimation unit 106 estimates information related to the printer resource corresponding to the received input information by using the trained neural network model stored in the model storage unit 104.

Specifically, various types of information included in the received input information are converted into a data structure (for example, a scalar value or a vector) that can be input to the trained neural network model and input to the trained neural network model, and the information related to the printer resource is estimated from the output of the trained model.

The output unit 107 performs control to output the estimated information related to the printer resource to a display unit 14F. An example of the estimated information related to the printer resource displayed on the display unit 14F under the control of the output unit 107 will be described below.

Next, specific processing performed by the information processing system 10 according to the present exemplary embodiment configured as described above will be described.

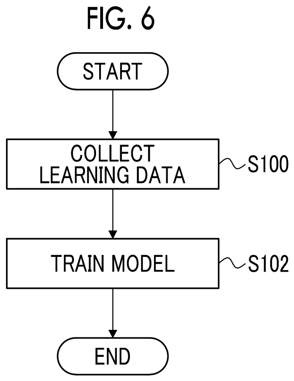

First, in the client computer 14, a CPU 14A reads out a learning program from the ROM 14B or the storage 14D, and loads the learning program into the RAM 14C and executes the learning program, thereby performing a learning process shown in FIG. 6.

In step S100, as the collection unit 101, the CPU 14A collects learning data including a pair of input information related to the print job and information related to the printer resource corresponding to the input information, and stores the learning data in the learning data storage unit 102.

In step S102, as the learning unit 103, the CPU 14A trains, using input information as an input, a neural network model for estimating the information related to the printer resource corresponding to the input information based on the plurality of learning data, stores the trained neural network model in the model storage unit 104, and ends the learning process.

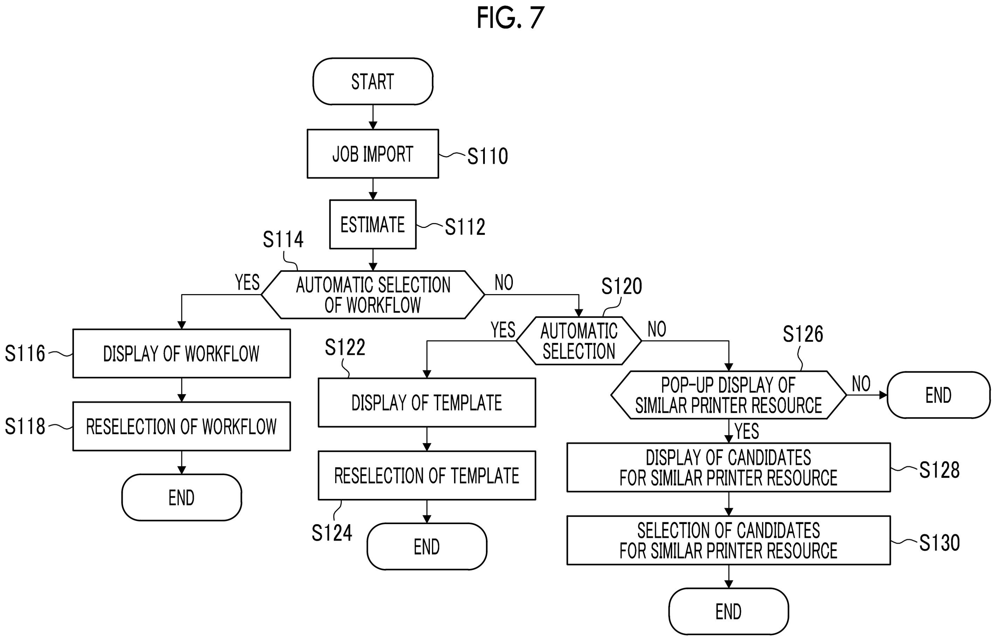

Next, in the client computer 14, the CPU 14A reads out an estimation program from the ROM 14B or the storage 14D and loads the estimation program into the RAM 14C and executes the estimation program, thereby performing an estimation process shown in FIG. 7 before a new print job to be estimated is processed by the printing apparatus 12. In this case, it is assumed that various types of information included in the input information related to a new print job to be estimated are input.

In step S110, as the reception unit 105, the CPU 14A receives import of the input information related to the new print job to be estimated.

In step S112, as the estimation unit 106, the CPU 14A estimates the information related to the printer resource using the trained neural network model stored in the model storage unit 104.

In step S114, as the output unit 107, the CPU 14A determines whether the printing apparatus 12 is set to automatically select the workflow.

As a result of the determination in step S114, in a case where the printing apparatus 12 is set to automatically select the workflow (step S114; Yes), in step S116, the CPU 14A displays the workflow estimated in step S112 on the display unit 14F, as the output unit 107.

In step S118, the CPU 14A receives reselection of the workflow estimated in step S112 and displayed on the display unit 14F in step S116.

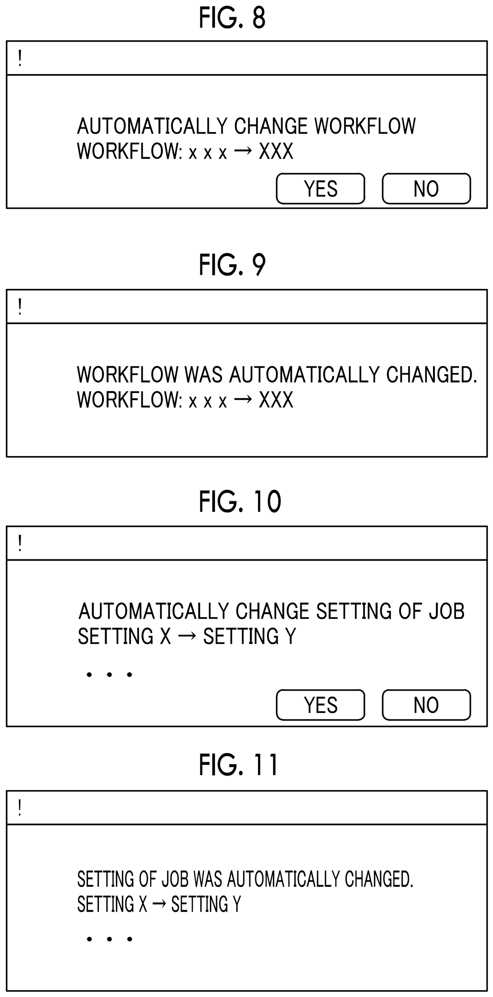

FIG. 8 is a diagram showing an example of a workflow reselection reception screen displayed on the display unit 14F by the CPU 14A. FIG. 9 is a diagram showing an example of a screen of a result of the workflow reselection displayed on the display unit 14F by the CPU 14A. In a case where the user selects a "Yes" button on the screen shown in FIG. 8, the CPU 14A displays the screen shown in FIG. 9 on the display unit 14F, thereby notifying the user that the workflow has been changed.

As a result of the determination in step S114, in a case where the printing apparatus 12 is not set to automatically select the workflow (step S114; No), in step S120, the CPU 14A determines whether the printing apparatus 12 is set to automatically set the template, as the output unit 107.

As a result of the determination in step S120, in a case where the printing apparatus 12 is set to automatically set the template (step S120; Yes), in step S122, the CPU 14A displays the template estimated in step S112 on the display unit 14F, as the output unit 107.

In step S124, the CPU 14A receives reselection of the template estimated in step S112 and displayed on the display unit 14F in step S122.

FIG. 10 is a diagram showing an example of a template reselection reception screen displayed on the display unit 14F by the CPU 14A. FIG. 11 is a diagram showing an example of a screen of a result of the template reselection displayed on the display unit 14F by the CPU 14A. In a case where the user selects a "Yes" button on the screen shown in FIG. 10, the CPU 14A displays the screen shown in FIG. 11 on the display unit 14F, thereby notifying the user that the template has been changed.

As a result of the determination in step S120, in a case where the printing apparatus 12 is not set to automatically set the template (step S120; No), in step S126, the CPU 14A determines whether the printing apparatus 12 is set to display a similar printer resource in a pop-up manner, as the output unit 107.

As a result of the determination in step S126, in a case where the printing apparatus 12 is set to display the similar printer resource in a pop-up manner (step S126; Yes), in step S128, the CPU 14A displays candidates for a printer resource similar to the printer resource corresponding to the input information estimated in step S112 on the display unit 14F, as the output unit 107. The printer resource similar to the printer resource refers to a printer resource that has some different settings.

In step S130, the CPU 14A receives selection of the candidates for the similar printer resource estimated in step S112 and displayed on the display unit 14F.

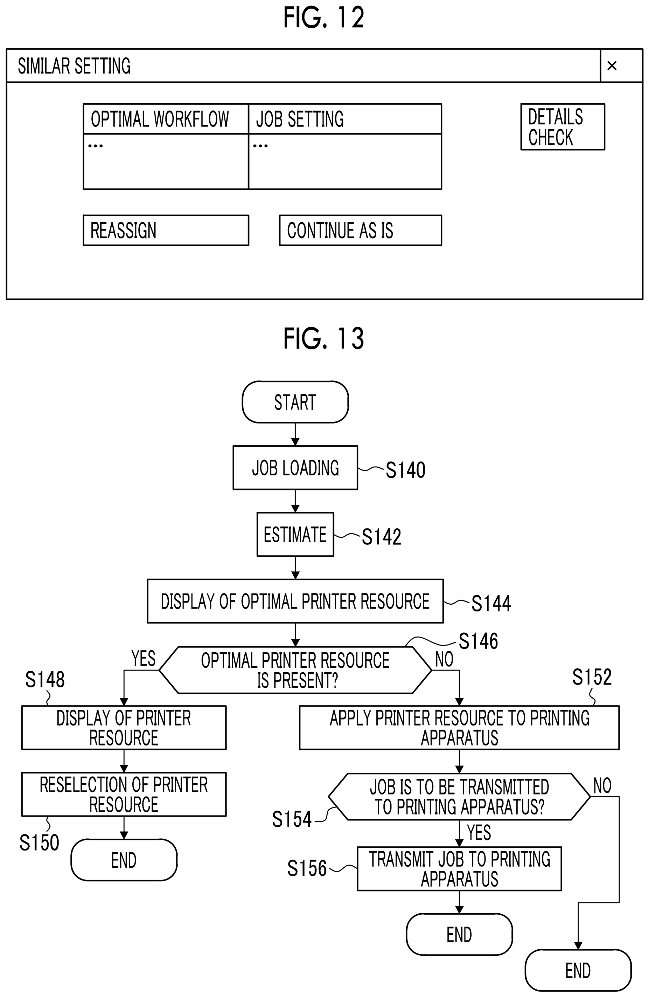

FIG. 12 is a diagram showing an example of a display screen of the candidates for the similar printer resource displayed on the display unit 14F by the CPU 14A. In a case where the user selects a "reassign" button in a state in which one printer resource among the displayed printer resources is selected, the CPU 14A executes a process of applying the selected printer resource to the printing apparatus 12.

By loading the print job into the client computer 14, the client computer 14 may perform a process of estimating the printer resource corresponding to the print job. In the client computer 14, the CPU 14A reads out an estimation program from the ROM 14B or the storage 14D and loads the estimation program into the RAM 14C and executes the estimation program, thereby performing an estimation process shown in FIG. 13 before a new print job to be estimated is processed by the printing apparatus 12. In this case, it is assumed that various types of information included in the input information related to a new print job to be estimated are input.

In step S140, as the reception unit 105, the CPU 14A receives import of the input information related to the new print job to be estimated.

In step S142, as the estimation unit 106, the CPU 14A estimates information related to an optimal printer resource for the input information by using the trained neural network model stored in the model storage unit 104.

In step S144, as the output unit 107, the CPU 14A displays the optimal printer resource for the input information estimated in step S142 on the display unit 14F.

In step S146, as the output unit 107, the CPU 14A determines whether the optimal printer resource for the input information estimated in step S142 is present in the printing apparatus 12 that executes printing.

In a case where the optimal printer resource for the input information estimated in step S142 is present in the printing apparatus 12 that executes printing (step S146; Yes), in step S148, the CPU 14A displays the template estimated in step S142 on the display unit 14F, as the output unit 107.

In step S150, the CPU 14A receives reselection of the template estimated in step S142 and displayed on the display unit 14F in step S148.

In a case where the optimal printer resource for the input information estimated in step S142 is not present in the printing apparatus 12 that executes printing (step S146; No), in step S152, the CPU 14A applies the template estimated in step S142 to the printing apparatus 12 that executes printing, as the output unit 107. Specifically, in a case where the template of the estimation result is not present in the printing apparatus 12, the CPU 14A acquires the corresponding template information from another printing apparatus 12 via the management apparatus 11, for example, and registers the template information in the printing apparatus 12.

In step S154, the CPU 14A determines whether to transmit the print job to the printing apparatus 12 that executes printing, as the output unit 107.

In a case where the print job is transmitted to the printing apparatus 12 that executes printing (step S154; Yes), in step S156, the CPU 14A transmits the print job to the printing apparatus 12 that executes printing, as the output unit 107. In a case where the print job is not transmitted to the printing apparatus 12 that executes printing (step S154; No), the CPU 14A ends the series of processes.

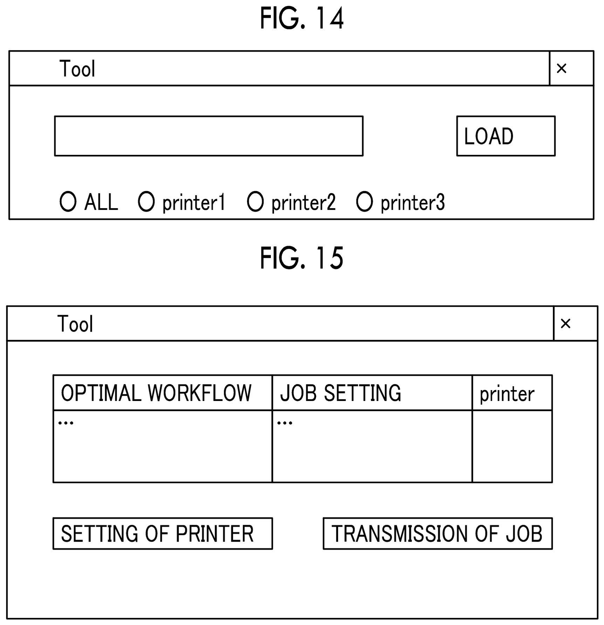

FIG. 14 is a diagram showing an example of a screen, displayed on the display unit 14F by the CPU 14A, for loading a print job. In a case where the user designates a new print job and selects a "load" button, the CPU 14A estimates information related to an optimal printer resource for the new print job to be estimated.

FIG. 15 is a diagram showing an example of a display screen of the optimal printer resource for the input information, which is displayed on the display unit 14F by the CPU 14A. The CPU 14A can notify the user whether the optimal printer resource for the input information is present in the printing apparatus 12 by displaying the screen shown in FIG. 15 on the display unit 14F.

In the present exemplary embodiment, it is also possible to continuously update the neural network model by using the feedback from the user. Specifically, the final selection or change content made by the user for the estimated printer resource is collected as the feedback from the user and is accumulated as additional learning data.

For example, in a case where the workflow or the template estimated in step S116 or step S122 is corrected or reselected by the user, data that includes the content of the correction or the reselection (printer resource actually finally selected by the user) and the input information is additionally stored in the learning data storage unit 102 as new learning data. Then, after a certain period of time has elapsed or in a stage in which a certain number of pieces of additional data are accumulated, the learning process in steps S100 and S102 is executed again, thereby periodically retraining the neural network model. In this way, by continuously updating the model using user feedback, the estimation accuracy of the information processing system of the present exemplary embodiment is improved over time, making it possible to provide more accurate estimation results that are more in line with the user's actual usage. In addition, through the continuous learning, it is possible to flexibly respond to changes in the environment or the business requirements.

Hereinafter, as a specific application example of the present exemplary embodiment, a job for mass-printing business cards in commercial printing work will be described.

For example, a case where a company urgently needs to print 1000 sets of business cards for all employees is considered. In the method in the related art, the operator in charge needs to visually check a large amount of past template and workflow setting information one by one in order to select the optimal template or workflow for the printing apparatus to be used. This work takes a long time even for an operator with specialized knowledge of printing work, and there is a risk of setting errors.

On the other hand, in the information processing system of the present exemplary embodiment, first, as the input information of the print job, the manuscript size (business card size), the paper type (thick coated paper), the application name, the post-processing information (trimming and boxing), and the like are input. The information processing system of the present exemplary embodiment uses a neural network model that has been trained in advance to instantly estimate an optimal template or workflow that has been performed in the past under the same or similar conditions, and automatically presents the optimal template or workflow to the operator. Since this estimation is performed instantly, the operator can quickly select the presented template, and thus the setting work time is considerably shortened as compared with a case where the neural network model in the related art is not used.

In addition, even in a case where the presented template is not present in the printing apparatus 12, in the present exemplary embodiment, the information processing system automatically acquires the template information from another printing apparatus on the identical network and applies the template information to the printing apparatus 12. In this way, since the optimal template set in the past on a different printing apparatus can be reused, it is possible to considerably improve the efficiency of the printing work and the consistency of the setting as compared with a case where the neural network model in the related art is not used.

As described above, according to the present exemplary embodiment, the time for selecting settings is shortened as compared with a case where the neural network model in the related art is not used, human error is prevented, and a print job can be quickly executed with stable quality even in a case where there is a sudden increase in work.

Although the exemplary embodiment of the present disclosure has been described in detail with reference to the accompanying drawings, the technical scope of the present disclosure is not limited to such examples. It is apparent that various modification examples or correction examples can be conceived by a person having ordinary knowledge in the technical field of the present disclosure within the scope of the technical idea described in the claims, and it is understood that these modification examples or correction examples are naturally included in the technical scope of the present disclosure.

In addition, the effects described in the above-described exemplary embodiment are descriptive or exemplary, and are not limited to those described in the above-described exemplary embodiment. That is, the technology according to the present disclosure can exhibit other effects that are apparent to a person having ordinary knowledge in the technical field of the present disclosure from the description in the above-described exemplary embodiment, together with the effects described in the above-described exemplary embodiment or instead of the effects described in the above-described exemplary embodiment.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

Regarding the above exemplary embodiments, the following supplementary notes will be further disclosed.
(((1))) An information processing system comprising:
   a processor configured to:
   input, to a trained model that has been trained in advance to output information related to a printer resource used for printing a manuscript by a print job for printing the manuscript in a case of receiving input information including information related to the print job, new input information including information related to a new print job for printing a manuscript, and output information related to a printer resource which is used in a printing apparatus that prints the manuscript and which corresponds to the new input information.
(((2))) The information processing system according to (((1))),
   wherein the information related to the printer resource includes a workflow that is a flow of a printing process in the printing apparatus or a template that is a setting for printing a printed matter in the printing apparatus.
(((3))) The information processing system according to (((1))) or (((2))), wherein the processor is configured to:
   train the trained model using, as learning data, information related to the manuscript as the information related to the print job and the information related to the printer resource.
(((4))) The information processing system according to (((3))), wherein the processor is configured to:
   train the trained model using, as learning data, a name of the print job and a name of an application in which the manuscript is generated as the information related to the print job.
(((5))) The information processing system according to (((3))) or (((4))), wherein the processor is configured to:
   train the trained model using, as learning data, content of printing work of the manuscript as the information related to the print job.
(((6))) The information processing system according to any one of (((1))) to (((5))), wherein the processor is configured to:
   automatically apply, to the printing apparatus, the output information related to the printer resource corresponding to the new input information.
(((7))) The information processing system according to any one of (((1))) to (((6))), wherein the processor is configured to:
   in a case where the output information related to the printer resource corresponding to the new input information is not present in the printing apparatus but is present in another printing apparatus, apply, to the printing apparatus, the information related to the printer resource corresponding to the new input information present in the other printing apparatus.
(((8))) An information processing program causing a computer to execute:
   inputting, to a trained model that has been trained in advance to output information related to a printer resource used for printing a manuscript by a print job for printing the manuscript in a case of receiving input information including information related to the print job, new input information including information related to a new print job for printing a manuscript, and outputting information related to a printer resource which is used in a printing apparatus that prints the manuscript and which corresponds to the new input information.

With the information processing system according to (((1))) and the information processing program according to (((8))), it is possible to output information related to an appropriate printer resource.

With the information processing system according to (((2))), it is possible to output an appropriate workflow or template.

With the information processing system according to (((3))), it is possible to output information related to an appropriate printer resource by using the trained model trained using the information related to the manuscript and the information related to the printer resource.

With the information processing system according to (((4))), it is possible to output information related to an appropriate printer resource by using the trained model trained using the name of the print job and the name of the application in which the document is generated.

With the information processing system according to (((5))), it is possible to output information related to an appropriate printer resource by using the trained model trained using the content of the printing work of the manuscript.

With the information processing system according to (((6))), it is possible to automatically apply the output printer resource to the printing apparatus.

With the information processing system according to (((7))), it is possible to automatically apply the information related to the printer resource present in the other printing apparatus to the printing apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
11: management apparatus
12: printing apparatus
14: client computer
101: collection unit
102: learning data storage unit
103: learning unit
104: model storage unit
105: reception unit
106: estimation unit
107: output unit

## Claims

1. An information processing system comprising:
a processor configured to:
input, to a trained model that has been trained in advance to output information related to a printer resource used for printing a manuscript by a print job for printing the manuscript in a case of receiving input information including information related to the print job, new input information including information related to a new print job for printing a manuscript, and output information related to a printer resource which is used in a printing apparatus that prints the manuscript and which corresponds to the new input information.

2. The information processing system according to claim 1,
wherein the information related to the printer resource includes a workflow that is a flow of a printing process in the printing apparatus or a template that is a setting for printing a printed matter in the printing apparatus.

3. The information processing system according to claim 1 or 2, wherein the processor is configured to:
train the trained model using, as learning data, information related to the manuscript as the information related to the print job and the information related to the printer resource.

4. The information processing system according to claim 3, wherein the processor is configured to:
train the trained model using, as learning data, a name of the print job and a name of an application in which the manuscript is generated as the information related to the print job.

5. The information processing system according to claim 3 or 4, wherein the processor is configured to:
train the trained model using, as learning data, content of printing work of the manuscript as the information related to the print job.

6. The information processing system according to any one of claims 1 to 5, wherein the processor is configured to:
automatically apply, to the printing apparatus, the output information related to the printer resource corresponding to the new input information.

7. The information processing system according to any one of claims 1 to 6, wherein the processor is configured to:
in a case where the output information related to the printer resource corresponding to the new input information is not present in the printing apparatus but is present in another printing apparatus, apply, to the printing apparatus, the information related to the printer resource corresponding to the new input information present in the other printing apparatus.

8. An information processing program causing a computer to execute:
inputting, to a trained model that has been trained in advance to output information related to a printer resource used for printing a manuscript by a print job for printing the manuscript in a case of receiving input information including information related to the print job, new input information including information related to a new print job for printing a manuscript, and outputting information related to a printer resource which is used in a printing apparatus that prints the manuscript and which corresponds to the new input information.

9. An information processing method comprising:
inputting, to a trained model that has been trained in advance to output information related to a printer resource used for printing a manuscript by a print job for printing the manuscript in a case of receiving input information including information related to the print job, new input information including information related to a new print job for printing a manuscript, and outputting information related to a printer resource which is used in a printing apparatus that prints the manuscript and which corresponds to the new input information.
